# EUROPÄISCHE PATENTSCHRIFT

(11) **EP 1 995 841 B1**
(45) Veröffentlichungstag und Bekanntmachung des Hinweises auf die Patenterteilung: **13.10.2010**
(21) Anmeldenummer: 07010150.6
(22) Anmeldetag: 22.05.2007
(51) Int. Cl.: H02G 15/18

(54) **Vorrichtung zur Verwendung in einer Kabelverbindungsanordnung mit einer derartigen Vorrichtung**
Device for use in a cable connection assembly with such a device
Dispositif d'utilisation dans une installation de liaisons câblées dotée d'un tel dispositif

(43) Veröffentlichungstag der Anmeldung: 26.11.2008
(73) Patentinhaber: Tyco Electronics Raychem GmbH, 85521 Ottobrunn (DE)
(72) Erfinder: Friedrich, Torsten, 81379 München (DE); Graf, Richard, 85716 Unterschleissheim (DE); Hardi, Markus, 85579 Neubiberg (DE)
(74) Vertreter: Klunker . Schmitt-Nilson . Hirsch

(56) Entgegenhaltungen:
- EP-A- 0 951 125
- DE-A1- 19 915 372
- DE-U1- 8 912 585
- GB-A- 2 298 527
- US-A- 6 064 006

## Beschreibung

Die vorliegende Erfindung betrifft eine Vorrichtung zur Verwendung in einer Kabelverbindungsanordnung, insbesondere an einer Verbindungsstelle zwischen wenigstens zwei Kabeln, mit einem Formkörper mit wenigstens einer Öffnung, in welche ein Kabel oder ein Teil eines Kabels einführbar ist und die sich durch den Formkörper hindurch erstreckt. Weiterhin betrifft die vorliegende Erfindung eine Verbindungsanordnung zum Anschluss wenigstens eines Kabels an einen elektrischen Leiter mit einer derartigen Vorrichtung.

Verbindungs- oder Abzweigstellen, insbesondere an Energiekabeln, werden unter verschiedensten Umgebungsbedingungen hergestellt, beispielsweise im Freien, in Innenräumen oder in Installationsräumen, wobei in jedem Fall ein hohes Maß an elektrischer Sicherheit und Beständigkeit gegen Umwelteinflüsse gewährleistet sein muss. Es kommen beispielsweise so genannte Abzweigmuffen zum Einsatz, bei denen etwa drei Energiekabel miteinander verbunden werden, wobei üblicherweise auf einer Seite der Muffe zwei Kabel parallel bis zum Verbinder verlaufen, auf der gegenüberliegenden Seite hingegen nur ein einzelnes Kabel in den Verbinder geführt wird. Insbesondere werden zur Bildung einer solchen Kabelverbindungsanordnung Formkörper, so genannte Adapter, eingesetzt, die auf ein vorbereitetes Kabel vor Herstellung der Verbindung aufgeschoben werden. Insbesondere weist ein solcher Adapter einen Formkörper mit einer oder mehreren Öffnungen auf, in welche jeweils ein Kabel eingeführt wird und die sich jeweils durch den Formkörper hindurch erstrecken.

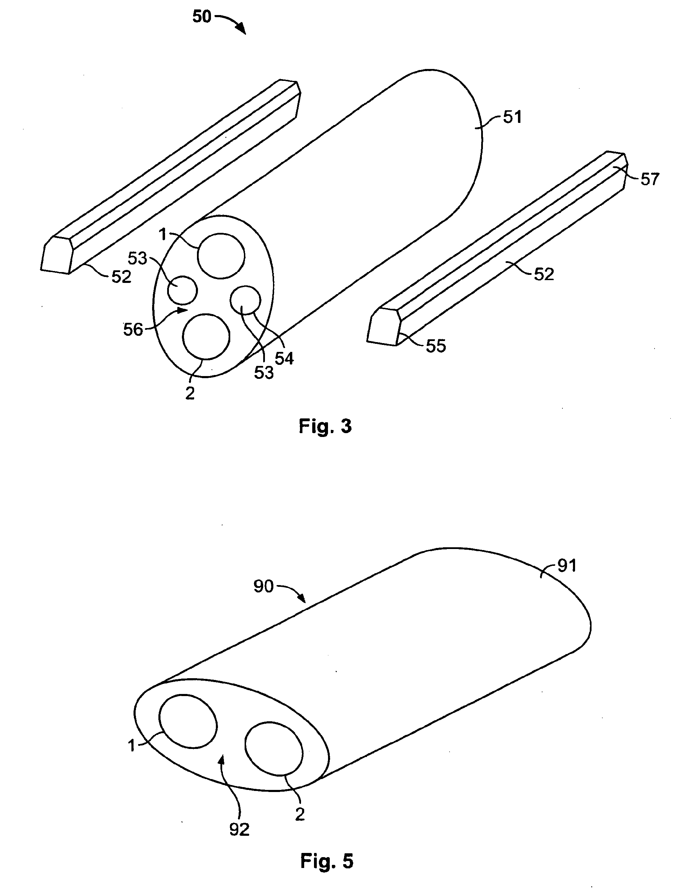

Ein solcher Formkörper zur Bildung eines Adapters in bekannter Bauart ist als Beispiel schematisch in Figur 5 gezeigt. Der gezeigte Adapter 90 weist einen Formkörper 91 mit im vorliegenden Fall zwei Öffnungen 1, 2 auf, die sich jeweils durch den Formkörper 91 hindurch erstrecken und näherungsweise parallel verlaufen. Der Adapter 90 wird mit Hilfe der sogenannten Aufschiebetechnik auf jeweils ein in die Öffnungen 1 und 2 einzuführendes Kabel aufgeschoben. In Figur 5 sind die Kabel, die in die Öffnungen 1 und 2 eingeführt werden, nicht dargestellt. Hierbei ist es Ziel, dass im Endzustand an der Grenzfläche zwischen Kabel und Formkörper des Adapters möglichst keine Lufteinschlüsse vorhanden sind, um das Problem von Teilentladungen an solchen Grenzflächen mit Lufteinschlüssen zu vermeiden. Um dieses Ziel zu erreichen, müssen sich die Öffnungen 1 und 2 nahezu formschlüssig an den Außenumfang des einzuführenden Kabels anpassen, was im Allgemeinen dadurch erreicht wird, dass die Öffnungen 1 und 2 beim Aufschieben des Adapters auf das bzw. die Kabel aufgedehnt werden. Hierbei ist es vorteilhaft, im Sinne einer möglichst einfachen Montierbarkeit die dazu notwendigen Aufschiebekräfte möglichst gering zu halten. Weiterhin ist es vorteilhaft, wenn ein solcher Adapter in einem großen Anwendungsbereich eingesetzt werden kann, mithin auf Kabel mit unterschiedlichem Außendurchmesser aufgebracht werden kann. Dies bedeutet jedoch, dass die Öffnungen im Hinblick auf einen kleinsten anzuwendenden Kabeldurchmesser bemessen sein müssen und bei Anwendung des Adapters auf größere Kabeldurchmesser entsprechend mehr aufgedehnt werden müssen, damit der Adapter auch auf größere Kabel aufgeschoben werden kann.

Bei einem Adapter gemäß der in Figur 5 gezeigten Art ist es weiterhin ein Erfordernis, dass der Zwischenraum 92 ("Zwickel") zwischen den beiden Öffnungen 1, 2, in welche Kabel eingeführt werden, lufteinschlussfrei mit Isoliermaterial ausgefüllt ist, um Teilentladungen in diesem Bereich zu vermeiden und um so die elektrische Funktion der Verbindungsanordnung zu gewährleisten. Bei dem hier dargestellten Formteil in Form des Adapters 90 kann dies durch Einsatz von Elastomer-Materialien gewährleistet werden, die einen im Wesentlichen ovalen Querschnitt mit zwei runden Aussparungen für die Kabel aufweisen.

Nachdem die Kabel in die Öffnungen eingeführt sind, wird über die Kabel und über den Adapter ein Muffenkörper herkömmlicher Bauart aufgebracht, der auch den elektrischen Verbinder zur Verbindung mit einem weiteren Kabel überdeckt. Ein solcher Muffenkörper ist in Figur 5 nicht dargestellt. Auch bei der Verbindung des Adapters mit dem aufgebrachten Muffenkörper ist es Ziel, dass zwischen den Grenzflächen von Adapter und Muffenkörper im Wesentlichen kein Lufteinschluss vorhanden ist, um Teilentladungen auch an dieser Stelle zu verhindern. Hierzu ist es erforderlich, dass sich der Muffenkörper gut an die Außenfläche des Adapters anschmiegen kann. Mithin ist es vorteilhaft, wenn die Außenform des Adapters, im Beispiel nach Figur 5 die ovale bzw. bauchige Form des Adapters 90, auch nach Einführen von Kabeln in die Öffnungen 1, 2 im Wesentlichen erhalten bleibt.

Beim Aufschieben des Adapters auf ein Kabel kann es unter Umständen im Zuge des Aufdehnens der entsprechenden Öffnung zu Materialverschiebungen im Zwischenraum zwischen den beiden Öffnungen kommen, so dass sich die Außenform des Adapters verändern kann. Da jedoch auch für alle möglichen Kabelquerschnitte die Außenform des Adapters im Wesentlichen oval bzw. bauchig bleiben muss, um Lufteinschlüsse zwischen Adapter und Muffenkörper zu verhindern, sind unter Umständen höhere Wandstärken des Formkörpers des Adapters notwendig. Damit ergibt sich jedoch der Nachteil, dass mehr Material beim Einführen der Kabel aufgedehnt werden muss, was im Widerspruch zum Ziel geringer Aufschiebekräfte steht. Somit ist es erforderlich, einen Kompromiss mit eingeschränktem Anwendungsbereich und gerade noch akzeptablen Aufschiebekräften einzugehen.

In EP 0 951 125 A2 ist ein Muffenkörper zum Abdecken von Kabeladerendabschnitten beschrieben, der als elastischer Körper mit mindestens zwei Durchführungen ausgebildet ist, wobei im Muffenkörper für jede Durchführung ein Feldsteuerelement integriert ist. Gemäß einer Ausführungsform ist eine Teilung des Muffenkörpers in zwei Hälften vorgesehen, wobei die Trennfläche im Querschnitt eine S-Form hat. Eine andere Ausführungsform sieht einen geteilten Muffenkörper mit zwei Hälften vor, die entlang einer geraden Fläche geteilt sind. Die zwei Muffenkörperhälften bilden zusammen einen Gesamtkörper.

In DE 199 15 372 A1 ist eine Dichteinheit für Kabeldurchführungen und ein Verfahren zum Umwickeln von Kabeln beschrieben, wobei ein streifenförmiger, elastischer, komprimierbarer und spiralförmiger Dichtkörper um das Kabel gewickelt wird. Der Außenumfang des scheibenförmigen Dichtkörpers ist im Wesentlichen zylindrisch, wobei eine Stanzlinie derart geformt ist, dass ein inneres Ende und ein äußeres Ende der Spirale spitz zulaufend sind. In der Mitte des Dichtkörpers ist ein Loch herausgestanzt.

In DE 89 12 585 U1 ist ein Abdichtelement mit einem ringförmigen Formkörper aus weichelastischem, geschäumten Material beschrieben, der geteilt und aufklappbar ausgebildet ist, der um mindestens einen länglichen Gegenstand herumgelegt diesen gegenüber einer den Gegenstand in radialem Abstand umgebenden Umhüllung abdichtet, insbesondere für eine metallische innere Umhüllung für eine elektrische Kabelverbindung. Die Flächen entlang der Teilung weisen miteinander in Eingriff bringbare Verriegelungsabschnitte auf, die die Enden des geteilten Formkörpers in verriegeltem Eingriff miteinander halten.

Der vorliegenden Erfindung liegt die Aufgabe zugrunde, eine Vorrichtung zur Verwendung in einer Kabelverbindungsanordnung, insbesondere an einer Verbindungsstelle zwischen wenigstens zwei Kabeln, der eingangs genannten Art anzugeben, bei der ein Formkörper zur Bildung eines Adapters geschaffen werden kann, der einen vergleichsweise großen Anwendungsbereich im Hinblick auf verschiedene Kabelquerschnitte bei akzeptablen Aufschiebekräften ermöglicht.

Diese Aufgabe wird gelöst durch eine Vorrichtung gemäß den Merkmalen des Patentanspruchs 1. Weiterhin betrifft die vorliegende Erfindung eine Verbindungsanordnung zum Anschluss wenigstens eines Kabels an einen elektrischen Leiter mit einer derartigen Vorrichtung gemäß Patentanspruch 7.

In einem Aspekt der Erfindung weist die Vorrichtung einen Formkörper mit wenigstens einer Öffnung auf, in welche ein Kabel oder ein Teil eines Kabels einführbar ist und die sich durch den Formkörper hindurch erstreckt. Hierbei weist der Formkörper wenigstens einen ersten Teil mit einem elastischen Material auf, der die Öffnung umgibt, wobei der Formkörper im ersten Teil wenigstens eine Aussparung aufweist, die mit einem separaten zweiten Teil des Formkörpers verschließbar ist. Der erste Teil des Formkörpers und die Aussparung mit eingebrachtem zweiten Teil des Formkörpers sind derart ausgebildet und angeordnet, dass bei Umhüllung des Formkörpers mit einem Muffenkörper der erste und zweite Teil des Formkörpers ein kompaktes Formkörpergebilde bilden und an einer Grenzfläche zwischen dem ersten und zweiten Teil im Wesentlichen kein Lufteinschluss vorhanden ist.

Es liegt dabei die Idee zugrunde, die äußere Form des Formkörpers und das Problem der Ausdehnung des Materials beim Einführen von Kabeln in die Öffnungen durch gezielte Ausgestaltung von unterschiedlichen Teilen des Formkörpers zumindest teilweise zu entkoppeln. Hierbei wird die zu dehnende Materialdicke des Formteiles dadurch reduziert, dass der Formkörper in einen ersten und zweiten Teil aufgeteilt wird und beim Einführen eines Kabels in eine entsprechende Öffnung lediglich das Material des ersten Teils des Formkörpers aufgedehnt werden muss. Der zweite Teil des Formkörpers, der in die Aussparung des ersten Teils eingeführt wird, wird erst nach Einführen des Kabels mit Aufbringen des Muffenkörpers fest mit dem ersten Teil verbunden und bildet in diesem Zustand ein kompaktes Formkörpergebilde ohne wesentliche Lufteinschlüsse, so dass Teilentladungen zwischen dem ersten Teil und zweiten Teil des Formkörpers nach Aufbringen des Muffenkörpers verhindert werden können und somit die elektrischen Funktion der Vorrichung und der Verbindungsanordnung insgesamt sichergestellt werden kann. Auch kann die Formgestaltung des ersten Teils des Formkörpers im Hinblick auf die Beibehaltung der ovalen bzw. bauchigen Form optimiert sein, insbesondere im Hinblick auf zu erwartende Materialverschiebungen beim Einführen eines Kabels in eine entsprechende Öffnung.

Das erfindungsgemäße Konzept ist insbesondere bei einer Adapterform, wie beispielhaft in Figur 5 dargestellt, vorteilhaft, bei der zwei parallele Öffnungen im Formkörper mit einem zwickelartigen Zwischenbereich vorgesehen sind. Hierbei ist es vorteilhaft, wenn der erste Teil des Formkörpers sich in den Zwischenbereich hinein erstreckt, um die jeweiligen Öffnungen zu umgeben, wobei jedoch die Aussparung derart angeordnet ist, dass im Zwischenbereich zwischen den Öffnungen die Querschnittsfläche des ersten Teils gegenüber der Querschnittsfläche des kompletten Formkörpers reduziert ist. Eine Reduzierung der Querschnittsfläche des ersten Teils im Zwischenbereich hat hierbei den Vorteil, dass in diesem kritischen Zwischenbereich beim Aufdehnen der parallelen Öffnungen weniger Material komprimiert werden muss. Dies verringert zum einen die erforderlichen Aufschiebekräfte, zum anderen kann besser gewährleistet werden, dass die grundsätzliche ovale oder bauchige Form des Formkörpers beibehalten wird, da weniger Material aufgedehnt bzw. verschoben werden muss.

Bei der Vorrichtung ist es in einer Ausführungsform vorgesehen, dass der zweite Teil des Formkörpers im Querschnitt eine Fläche aufweist, die größer ist als die Querschnittsfläche der Aussparung. Dadurch wird die Aussparung beim Einführen des zweiten Teils in den ersten Teil des Formkörpers aufgeweitet, um Lufteinschlüsse an der Grenzfläche zwischen den Formteilen zu vermeiden.

Weitere vorteilhafte Aus- und Weiterbildungen der Erfindung sind in den Unteransprüchen angegeben.

Die Erfindung wird im Folgenden anhand der in der Zeichnung dargestellten Figuren näher erläutert.
- Figur 1: zeigt verschiedene Ausführungsformen einer Vorrichtung zur Verwendung in einer Kabelverbindungsanordnung mit einem Formkörper, der mehrere aneinander angrenzende Teile aufweist,
- Figur 2: zeigt weitere Ausführungsformen einer Vorrichtung mit einem Formkörper, der zwei aneinander angrenzende Teile mit einer jeweiligen Öffnung für ein einzuführendes Kabel aufweist,
- Figur 3: zeigt eine Ausführungsform einer erfindungsgemäßen Vorrichtung mit einem mehrteiligen Formkörper, dessen Teile in separater Anordnung dargestellt sind, wobei separate Formteile in Aussparungen eines ersten Teils des Formkörpers einführbar sind,
- Figur 4: zeigt eine Ausführungsform einer Verbindungsanordnung zur Verbindung von drei Kabeln unter Verwendung einer oder mehrerer der Vorrichtungen gemäß Figuren 1 bis 3,
- Figur 5: zeigt einen Adapter bekannter Bauart zur Verwendung in einer Kabelverbindungsanordnung.

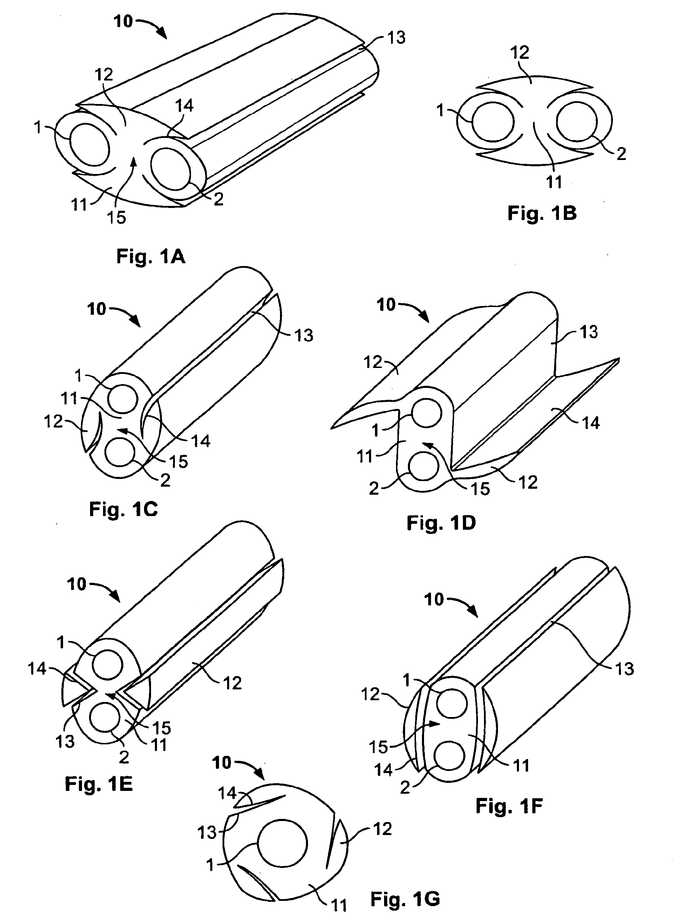

In Figur 1 sind zum besseren Verständnis der Funktionsweise der Erfindung unterschiedliche Ausführungsformen einer Vorrichtung 10 gezeigt, die sich als Adapter in einer Kabelverbindungsanordnung einsetzen lassen. Den Ausführungsformen gemäß Figuren 1a bis 1g ist hierbei gemein, dass der Formkörper zur Bildung des Adapters einen ersten Teil 11 mit einem elastischen Material und einen zweiten Teil 12 mit einem elastischen Material aufweist, wobei der zweite Teil 12 an den ersten Teil 11 angrenzt und nur teilweise oder nicht an dem ersten Teil 11 angebracht ist. Die Öffnungen 1, 2, in welche ein jeweiliges Kabel oder ein Teil eines Kabels einführbar ist und die sich im Wesentlichen parallel durch den Formkörper hindurch erstrecken, sind hierbei in dem ersten Teil des Formkörpers angeordnet.

Die in Figur 1 gezeigten Formkörper sind in einem Zustand vor Installation eines Kabels gezeigt. In den Ausführungsformen der Figur 1a bis Figur 1d sowie Figur 1g ist der zweite Teil 12 nur teilweise an dem ersten Teil 11 angebracht, wobei der zweite Teil 12 zumindest teilweise vom ersten Teil 11 absteht. Sofern diese Formgebung der teilweise abgetrennten Formteile 11, 12 nicht über eine Gussform zu erzielen ist, können verschiedene Verfahren zum Trennen der Formteile in Betracht gezogen werden. Beispielsweise werden die Formteile 11, 12 durch Messerschnitt (Kreis-Langmesser), Schneidwalzen, Hochdruck-Wasserstrahlschneiden und/oder wasserstrahlgekühltes Laserschneiden getrennt. Somit kann der zweite Teil 12 in unterschiedlichster Art und Weise, wie in Figur 1 dargestellt, zumindest teilweise von einem einheitlichen Formkörper abgetrennt werden, so dass der erste Teil 11 mit reduzierter Materialstärke verbleibt, der die Öffnungen 1 und 2 umgibt. Gemäß Figur 1e und Figur 1f sind die Formteile 12 ganz von dem ersten Teil 11 des Formkörpers abgetrennt, bzw. werden getrennt zum ersten Teil 11 des Formkörpers hergestellt. Auch hierbei sind unterschiedlichste Formgebungen der unterschiedlichen Formteile 11, 12 denkbar, wie in Figur 1 dargestellt.

Der Grundgedanke, der allen Ausführungsformen nach Figur 1 zugrunde liegt, ist der, dass sich mit entsprechender Formgestaltung der Formteile 12 die bei Einführen eines Kabels in eine der Öffnungen 1, 2 zu dehnende Materialstärke des Formkörpers entsprechend reduziert, wodurch sich Aufschiebekräfte beim Einführen eines Kabels in eine der Öffnungen verringern lassen. Eine im späteren Installationsprozess verwendete Kaltschrumpfmuffe, oder alternativ auch eine Warmschrumpfmuffe, presst die separaten oder abstehenden Formteile 12 so an den ersten Teil 11 des Formkörpers, dass der Zwischenraum im Wesentlichen frei von Lufteinschlüssen ist.

In diesem Zusammenhang weisen der jeweilige erste und zweite Teil 11, 12 des Formkörpers eine jeweilige Grenzfläche 13 bzw. 14 auf, die einander gegenüberliegen und an denen die Teile 11, 12 aneinanderstoßen. Insbesondere weist der erste Teil 11 des Formkörpers eine Grenzfläche 13 auf, die einer Grenzfläche 14 eines der zweiten Teile 12 des Formkörpers gegenüberliegt und die sich bei Aufbringen eines Muffenkörpers auf den Formkörper so aneinander anschmiegen, dass im Wesentlichen kein Lufteinschluss zwischen diesen Grenzflächen vorhanden ist. Hierbei ist es Ziel, dass der Zwischenraum frei von Lufteinschlüssen ist, wobei es jedoch aufgrund von Materialeinflüssen und/oder geringfügigen Formabweichungen möglich sein kann, dass noch geringere Mengen an Luft in Teilbereichen des Zwischenraums vorhanden sind. Die Formteile 11 und 12 des Formkörpers sind durch entsprechende Formgebung ihrer Grenzflächen derart ausgebildet, dass bei Umhüllung mit einem Muffenkörper die jeweiligen Teile 11 und 12 des Formkörpers zur Bildung eines kompakten Formkörpergebildes aneinander gepresst werden, so dass sich elektrische Eigenschaften ergeben wie bei einem einheitlichen Adapter bekannter Bauart gemäß Figur 5. Ziel ist es hierbei, durch möglichst wenig Lufteinschluss zwischen den jeweiligen Grenzflächen Teilentladungen an den Grenzflächen zu vermeiden.

In den Ausführungsbeispielen gemäß Figur 1 sind zum einen Ausführungsformen eines Formkörpers gezeigt, bei denen zwei Öffnungen zum jeweiligen Einführen eines Kabels vorgesehen sind, die sich jeweils durch den Formkörper hindurch erstrecken. Wie jedoch aus Figur 1g ersichtlich, ist das Prinzip auch auf einen Formkörper für ein Einzelkabel anwendbar. Bei einem Formkörper mit zwei parallel geführten Öffnungen ist eine zugrunde liegende Idee darin zu sehen, dass in einem Zwischenbereich 15 zwischen und in der Nähe der beiden Öffnungen 1, 2 die Querschnittsfläche des ersten Teils 11 gegenüber der Querschnittsfläche des gesamten Formkörpers reduziert ist. Bei einer ovalen oder bauchigen Form des Formkörpers weist der Zwischenbereich der Gesamtanordnung des Formkörpers einen relativ zu den Außenbereichen des Formkörpers auf der jeweils gegenüberliegenden Seite der Öffnungen größeren Durchmesser auf. An dieser Stelle wird mit Vorsehen eines jeweiligen Formteils 12 zum Aufschieben eines Kabels an dem Formteil 11 gezielt Material entnommen, so dass weniger Material beim Aufschieben eines Kabels aufgedehnt werden muss. Dies reduziert zum einen die erforderlichen Aufschiebekräfte, zum anderen wird mit einer geringeren Materialdicke gewährleistet, dass die ovale oder rundliche Endform des Formkörpers beim Aufbringen des Muffenkörpers beibehalten wird, so dass sich eine lufteinschlussfreie Verbindung zwischen Formkörper und Muffenkörper ergibt. Der im späteren Installationsprozess aufgebrachte Muffenkörper presst die separaten oder abstehenden Formteile 12 so an das jeweilige Formteil 11, dass der Zwischenraum im Wesentlichen frei von Lufteinschlüssen ist. Fasen oder Rundungen an den Enden der Formteile können zum Entweichen der Luft hilfreich sein.

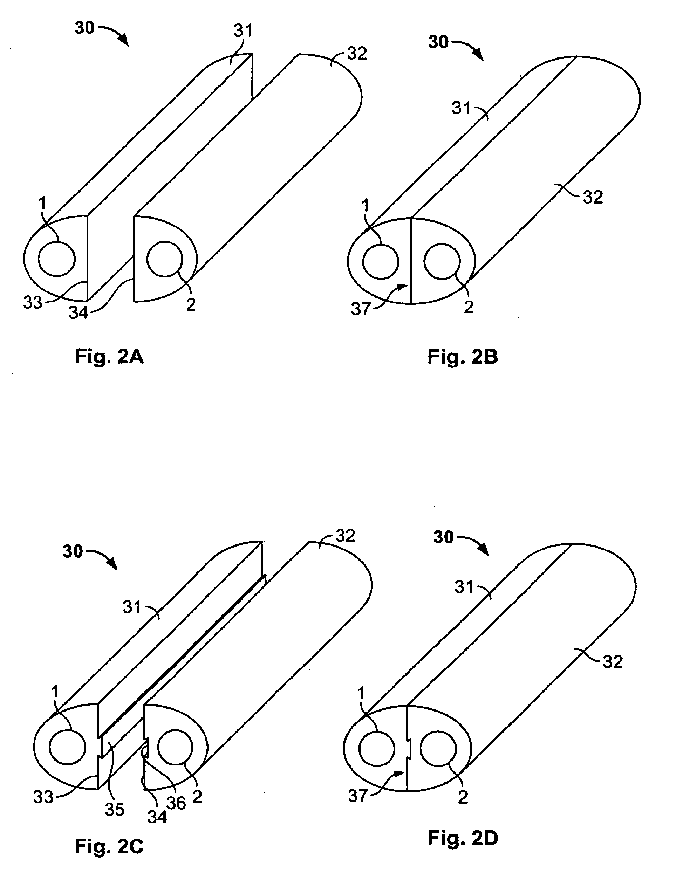

In Figur 2 sind zum besseren Verständnis der Erfindung weitere Ausführungsformen einer Vorrichtung 30 dargestellt. Bei den Ausführungsformen gemäß Figur 2 werden jeweils zwei separate Formteile 31, 32 verwendet, die jeweils eine der Öffnungen 1, 2 umgeben, so dass sich die Öffnung 1 durch den Teil 31 hindurch erstreckt und die Öffnung 2 durch den Teil 32 des Formkörpers. Der erste Teil 31 weist eine Grenzfläche 33 auf, die einer Grenzfläche 34 des zweiten Teils 32 gegenüberliegt. An den Grenzflächen 33, 34 stoßen die Teile 31 und 32 aneinander. In der Ausführungsform nach Figuren 2a und 2b weisen der erste und zweite Teil 31, 32 eine näherungsweise gleiche Querschnittsfläche auf, so dass es sich im Wesentlichen um identische Formteile handelt. Diese Formteile 31, 32 werden einzeln auf ein jeweiliges Kabel aufgeschoben. Ein einzelnes Formteil benötigt hierbei eine wesentlich geringere Aufschiebekraft als ein Formkörper mit zwei parallelen Öffnungen. Durch den im späteren Installationsprozess des Muffenkörpers entstehenden Anpressdruck werden die Formteile 31, 32 so aneinander gepresst, dass im Wesentlichen keine Lufteinschlüsse zwischen den Grenzflächen 33, 34 mehr vorhanden sind.

Damit die Formteile 31, 32 nach dem Aufschiebevorgang eventuell besser zueinander positioniert sind, ist bei der Ausführungsform gemäß Figur 2c und Figur 2d eine mechanische Befestigungseinrichtung 35, 36 vorgesehen, die an den Grenzflächen 33, 34 der Formteile 31, 32 angeordnet ist. Die Befestigungseinrichtung gemäß Figur 2 sieht hierbei eine so genannte Schwalbenschwanznut 36 an der Grenzfläche 34 vor, in die eine entsprechende Feder 35 an der Grenzfläche 33 eingreift. Ein Vorsehen einer derartigen Befestigungsvorrichtung verbessert die mechanische Verbindung zwischen den Formteilen 31, 32, so dass Lufteinschlüsse an den Grenzflächen vergleichsweise zuverlässig verhindert werden können. Jedoch ist gegenüber der Ausführung nach Figuren 2a und 2b eine Unterscheidung der Formteile nach Nut- und Federausführung erforderlich.

Auch bei den Ausführungsformen gemäß Figur 2 wird im Zwischenbereich 37 zwischen den Öffnungen 1, 2 die Querschnittsfläche eines der Teile 31, 32 gegenüber der Querschnittsfläche des gesamten Formkörpers reduziert und somit die aufzudehnende Materialstärke verringert.

In Figur 3 ist eine Ausführungsform einer erfindungsgemäßen Vorrichtung 50 gezeigt. Der Formkörper gemäß der Ausführungsform nach Figur 3 weist wiederum einen ersten Teil 51 auf, der ein elastisches Material enthält und der die Öffnungen 1, 2 umgibt, in welche jeweils ein Kabel eingeführt werden kann. Hierbei weist der Formkörper 51 im vorliegenden Fall mehrere Aussparungen 53 auf, die mit jeweils einem separaten zweiten Teil 52 des Formkörpers verschließbar sind. Die Formteile 52 der Ausführungsform gemäß Figur 3 sind hierbei als langgestreckte Formelemente ausgeführt, welche im Querschnitt eine jeweilige Fläche aufweisen, die größer ist als die Querschnittsfläche der zugehörigen Aussparung 53. Dadurch weiten sich die Aussparungen 53 bei Einführen der Formelemente 52 auf, so dass an den Grenzflächen 54, 55 zwischen dem Formteil 51 und dem Formteil 52 im Wesentlichen kein Lufteinschluss vorhanden ist. Die Querschnittsfläche der Formteile 52 muss hierbei nicht der Querschnittsfläche der Aussparungen 53 angepasst sein. Auch in dieser Ausführungsform kann es vorteilhaft sein, wenn an wenigstens einem Endbereich einer jeweiligen Grenzfläche 54, 55 wenigstens eine Fase und/oder Rundung angeordnet ist, um beim Zusammenführen der Teile 51, 52 ein Entweichen von Luft zu erleichtern. Eine Fase in Form einer abgeschrägten Fläche ist in Figur 3 beispielhaft mit Bezugszeichen 57 verdeutlicht. Eine Abrundung der in Figur 3 dargestellten Kanten der Formteile 52 kann ein formschlüssiges Angrenzen an die Innenfläche der Aussparung 53 verbessern.

Die Ausführungsform nach Figur 3 verfolgt das Ziel, in dem Zwischenbereich 56 zwischen den Öffnungen 1, 2 die materialgefüllte Querschnittsfläche des Teils 51 gegenüber der Querschnittsfläche des gesamten Formkörpers mit eingebrachten Formteilen 52 zu reduzieren. Hierbei wird die Materialdicke im Zwischenbereich 56 durch Vorsehen der Aussparungen 53 verringert. Die Aussparungen können hierbei verschiedene Formen aufweisen, wie kreisrunde oder viereckige Formen. Durch die gezielte Materialentnahme verhelfen die Aussparungen 53 zur Reduzierung der Aufschiebekraft. Zudem kann das Formteil 51 in der Form so angepasst werden, dass eine für den aufzubringenden Muffenkörper optimale bauchige oder ovale Form zur Verfügung steht. Nach dem Aufschiebevorgang des Formteils 51 auf das/die Kabel werden die separaten Formteile 52 in die Aussparungen 53 geschoben. Diese weisen im Vergleich zu den Aussparungen eine definiert größere Form bzw. Querschnittsfläche auf, die jedoch nicht identisch sein muss. Dadurch und durch den im späteren Installationsprozess des Muffenkörpers, insbesondere in Form einer Kaltschrumpfmuffe, entstehenden Anpressdruck werden Lufteinschlüsse vermieden.

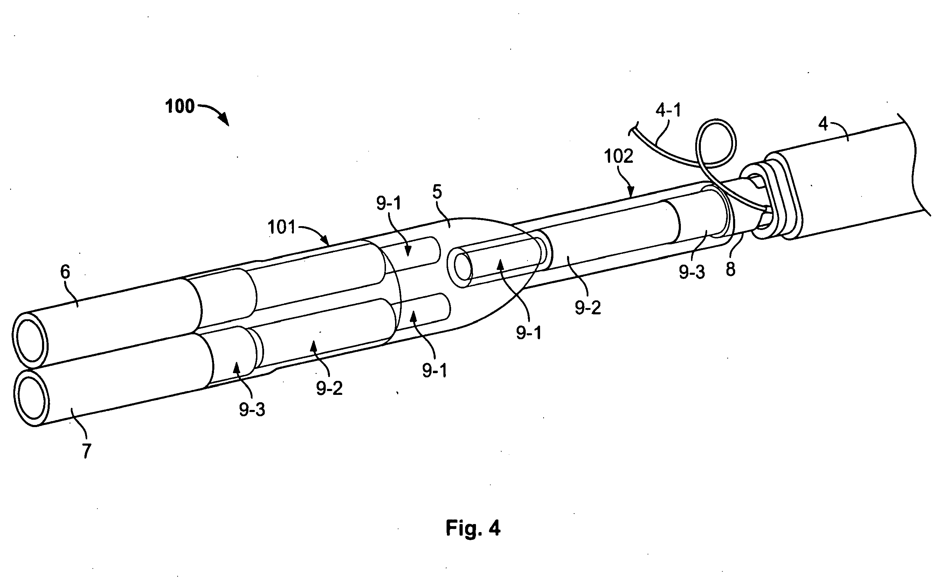

In Figur 4 ist eine Ausführungsform einer Verbindungsanordnung 100 zur Verbindung dreier Kabel 6, 7 und 8 dargestellt. Die Kabel 6, 7 und 8 werden hierbei über einen Verbinder 5 miteinander verbunden. Die Kabel 6, 7 bzw. Teile 9-1 bis 9-3 der Kabel 6, 7 sind hierbei in einen Adapter 101 eingebracht, während das Kabel 8 bzw. dessen Teile 9-1 bis 9-3 in einen Adapter 102 eingebracht ist. Die Adapter 101 und 102 können durch eine Vorrichtung 10, 30 oder 50 realisiert sein, wie anhand von Figuren 1 bis 3 erläutert. Im elektrischen Verbinder 5 werden die aus den Kabeln 6, 7 und 8 austretenden elektrischen Leiter (Kabelader) 9-1 miteinander verbunden. Desweiteren sind eine Kabelisolation und Kabelleitschicht mit 9-2 bzw. 9-3 gekennzeichnet. In Figur 4 ist weiterhin dargestellt, wie ein Muffenkörper 4, hier in Form einer Kaltschrumpfmuffe, wenigstens teilweise um den Formkörper eines der Adapter herum angeordnet wird in einer Form, dass wenigstens in Teilbereichen zwischen Formkörper und Muffenkörper im Wesentlichen kein Lufteinschluss vorhanden ist. Dadurch werden auch Teilentladungen in diesem Bereich der Verbindungsanordnung vermieden. Durch Anordnung des Muffenkörpers 4 und Aufschrumpfen (durch Abziehen der Litze 4-1) über den erfindungsgemäß ausgestalteten Formkörpern der Adapter 101, 102 werden die unterschiedlichen Teile der jeweiligen Formkörper aneinander gepresst in der Art und Weise, wie vorstehend beschrieben.

Obwohl die Anordnung gemäß Figur 4 zur Verbindung von mehreren Kabeln miteinander dient, ist es im Zusammenhang mit der vorliegenden Erfindung grundsätzlich auch möglich, einen Formkörper allgemein zur Verbindung eines Kabels mit einem elektrischen Leiter, entweder eines anderen Kabels oder einer etwaigen elektrischen Vorrichtung, vorzusehen.

### Bezugszeichenliste

- 1, 2: Öffnung
- 4: Muffenkörper
- 5: Verbinder
- 6, 7, 8: Kabel
- 9-1: elektrischer Leiter
- 9-2: Kabelisolation
- 9-3: Kabelleitschicht
- 10, 30, 50: Vorrichtung
- 11, 31, 51: erster Teil des Formkörpers
- 12, 32, 52: zweiter Teil des Formkörpers
- 13, 14: Grenzfläche
- 15: Zwischenbereich
- 33, 34: Grenzfläche
- 35, 36: Befestigungsvorrichtung
- 37: Zwischenbereich
- 53: Aussparung
- 54, 55: Grenzfläche
- 56: Zwischenbereich
- 57: Fase
- 90: Adapter
- 91: Formkörper
- 92: Zwischenbereich
- 100: Verbindungsanordnung
- 101, 102: Adapter

## Patentansprüche

1. Vorrichtung (50) zur Verwendung in einer Kabelverbindungsanordnung, insbesondere an einer Verbindungsstelle zwischen wenigstens zwei Kabeln,
- mit einem Formkörper (51, 52), der wenigstens einen ersten Teil (51) mit einem elastischen Material wenigstens eine Öffnung (1, 2) umgibt, in welche ein Kabel oder ein Teil eines Kabels (6-8) einführbar ist und die sich durch den Formkörper hindurcherstreckt,
- bei der der Formkörper im ersten Teil (51) wenigstens eine Aussparung (53) aufweist, die mit dem separaten zweiten Teil (52) des Formkörpers verschließbar ist,
- bei der der erste Teil (51) des Formkörpers und die Aussparung (53) mit eingebrachtem zweiten Teil (52) derart ausgebildet und angeordnet sind, dass bei Umhüllung des Formkörpers mit einem Muffenkörper (4) der erste und zweite Teil (51, 52) des Formkörpers ein kompaktes Formkörpergebilde bilden und an einer Grenzfläche (54, 55) zwischen dem ersten und zweiten Teil im wesentlichen kein Lufteinschluss vorhanden ist.

2. Vorrichtung nach Anspruch 1,
bei der der zweite Teil (52) im Querschnitt eine Fläche aufweist, die größer ist als die Querschnittsfläche der Aussparung (53).

3. Vorrichtung nach einem der Ansprüche 1 oder 2, bei der
- der Formkörper wenigstens zwei Öffnungen (1, 2) aufweist, in welche jeweils ein Kabel (6-8) einführbar ist und die sich durch den Formkörper im wesentlichen parallel hindurcherstrecken, und einen Zwischenbereich (15, 37, 56) zwischen den Öffnungen (1, 2) aufweist,
- der erste Teil (11, 31, 51) des Formkörpers sich in den Zwischenbereich (15, 37, 56) erstreckt und der zweite Teil (12, 32) des Formkörpers bzw. die Aussparung (53) derart angeordnet sind, dass im Zwischenbereich (15, 37, 56) zwischen den Öffnungen die Querschnittsfläche des ersten Teils (11, 31, 51) gegenüber der Querschnittsfläche des Formkörpers reduziert ist.

4. Vorrichtung nach einem der Ansprüche 1 bis 3,
bei der an wenigstens einem Endbereich einer jeweiligen Grenzfläche (13, 14, 33, 34, 54, 55) wenigstens eine Fase und/oder Rundung (57) angeordnet ist, um beim Zusammenführen der Teile (11, 12, 31, 32, 51, 52) ein Entweichen von Luft zu erleichtern.

5. Vorrichtung nach einem der Ansprüche 1 bis 4,
bei der das Formkörpergebilde (11, 12, 31, 32, 51, 52) einen rundlichen, insbesondere einen näherungsweise ovalen oder elliptischen Querschnitt aufweist.

6. Verbindungsanordnung (100) zum Anschluss wenigstens eines Kabels (6, 7) an einen elektrischen Leiter (8), mit wenigstens einer Vorrichtung (10, 30, 50) nach einem der Ansprüche 1 bis 5, die auf das wenigstens eine Kabel aufgebracht ist, und mit einem Muffenkörper (4), der wenigstens teilweise um den Formkörper (11, 12, 31, 32, 51, 52) der Vorrichtung herum angeordnet ist und den Formkörper derart umgibt, dass wenigstens in Teilbereichen zwischen Formkörper und Muffenkörper im wesentlichen kein Lufteinschluss vorhanden ist.

7. Verbindungsanordnung nach Anspruch 6,
bei der mit Umhüllung des Formkörpers mit dem Muffenkörper (4) der erste und zweite Teil (11, 12, 31, 32, 51, 52) des Formkörpers zur Bildung eines kompakten Formkörpergebildes aneinandergepresst werden.

## Claims

1. Device (50) for use in a cable connection arrangement, in particular at a connecting point between at least two cables,
- comprising a moulded body (51, 52) having at least a first part (51) with a resilient material, which surrounds at least one opening (1, 2), into which a cable or part of a cable (6-8) may be introduced and which extends through the moulded body,
- in which the moulded body has in the first part (51) at least one recess (53), which is closable by means of the separate second part (52) of the moulded body,
- in which the first part (51) of the moulded body and the recess (53) with the second part (52) introduced are constructed and disposed in such a way that upon enclosure of the moulded body by a sleeve body (4) the first and second parts (51, 52) of the moulded body form a compact moulded body formation and there is substantially no air pocket at an interface (54, 55) between the first and second parts.

2. Device according to claim 6, in which the second part (52) in cross section has an area that is greater than the cross-sectional area of the recess (53).

3. Device according to one of claims 1 or 2, in which
- the moulded body has at least two openings (1, 2), into each of which a cable (6-8) may be introduced and which extend substantially parallel through the moulded body, and an intermediate region (15, 37, 56) between the openings (1, 2),
- the first part (11, 31, 51) of the moulded body extends into the intermediate region (15, 37, 56) and the second part (12, 32) of the moulded body and/or the recess (53) are disposed in such a way that in the intermediate region (15, 37, 56) between the openings the cross-sectional area of the first part (11, 31, 51) is reduced relative to the cross-sectional area of the moulded body.

4. Device according to one of claims 1 to 3, in which at at least one end region of a respective interface (13, 14, 33, 34, 54, 55) at least one chamfer and/or rounded portion (57) is disposed for facilitating an escape of air when the parts (11, 12, 31, 32, 51, 52) are brought together.

5. Device according to one of claims 1 to 4, in which the moulded body formation (11, 12, 31, 32, 51, 52) has a bellied, in particular an approximately oval or elliptical cross section.

6. Connection arrangement (100) for the connection of at least one cable (6, 7) to an electric conductor (8), comprising at least one device (10, 30, 50) according to one of claims 1 to 5, which is fitted onto the at least one cable, and comprising a sleeve body (4), which is disposed at least partially around the moulded body (11, 12, 31, 32, 51, 52) of the device and surrounds the moulded body in such a way that at least in sub-regions between moulded body and sleeve body there is substantially no air pocket.

7. Connection arrangement according to claim 6, in which with enclosure of the moulded body by the sleeve body (4) the first and second parts (11, 12, 31, 32, 51, 52) of the moulded body are pressed against one another to form a compact moulded body formation.

## Revendications

1. Dispositif (50) destiné à être utilisé dans un assemblage de connexion de câbles, en particulier au niveau d'un point de connexion entre au moins deux câbles ;
comprenant un corps moulé (51, 52), comportant au moins une première partie (51) composée d'un matériau élastique entourant au moins une ouverture (1, 2), dans laquelle peut être inséré un câble ou une partie d'un câble (6-8), et s'étendant à travers le corps moulé ;
le corps moulé comportant dans la première partie (51) au moins un évidement (53), pouvant être fermé par la deuxième partie séparée (52) du corps moulé ;
la première partie (51) du corps moulé et l'évidement (53), avec la deuxième partie (52) mise en place, étant formés et agencés de sorte que lors de l'enveloppement du corps moulé par un corps de manchon (4), les première et deuxième parties (51, 52) du corps moulé forment une structure de corps moulé compacte, aucun piégeage d'air n'existant pour l'essentiel au niveau d'une surface limite (54, 55) entre les première et deuxième parties.

2. Dispositif selon la revendication 1,
dans lequel la deuxième partie (52) a une surface de section transversale plus grande que la surface de section transversale de l'évidement (53).

3. Dispositif selon les revendications 1 ou 2, dans lequel
le corps moulé comporte au moins deux ouvertures (1, 2), dans lesquelles peut être inséré respectivement un câble (6-8), et s'étendant pour l'essentiel de manière parallèle à travers le corps moulé, un espace intermédiaire (15, 37, 56) étant établi entre les ouvertures (1, 2) ;
la première partie (11, 31, 51) du corps moulé s'étend dans l'espace intermédiaire (15, 37, 56), la deuxième partie (12, 32) du corps moulé et l'évidement (53) étant agencés de sorte que dans l'espace intermédiaire (15, 37, 56) entre les ouvertures, la surface de section transversale de la première partie (11, 31, 51) est réduite par rapport à la surface de section transversale du corps moulé.

4. Dispositif selon l'une des revendications 1 à 3,
dans lequel au moins un chanfrein et/ou une courbure est agencé dans au moins une zone d'extrémité d'une surface limite respective (13, 14 ; 33, 34, 54, 55), pour faciliter un échappement de l'air lors de l'assemblage des parties (11, 12, 31, 32, 51, 52).

5. Dispositif selon l'une des revendications 1 à 4,
dans lequel la structure du corps moulé (11, 12, 31, 51, 52) comporte une section transversale arrondie, en particulier une section transversale pratiquement ovale ou elliptique.

6. Assemblage de connexion (100) pour connecter au moins un câble (6, 7) à un conducteur électrique (8), comportant au moins un dispositif (10, 30, 50) selon l'une des revendications 1 à 5, agencé sur le au moins un câble, et un corps de manchon (4), agencé au moins en partie autour du corps moulé (11, 12, 31, 32, 51, 52) du dispositif et entourant le corps moulé, de sorte à empêcher pratiquement un piégeage d'air, au moins dans des sections partielles entre le corps moulé et le corps de manchon.

7. Assemblage de connexion selon la revendication 6,
dans lequel, lors de l'enveloppement du corps moulé par le corps de manchon (4), les première et deuxième parties (11, 12, 31, 32, 51, 52) du corps moulé sont pressées l'une contre l'autre pour former une structure de corps moulé compacte.
